# EUROPÄISCHE PATENTSCHRIFT

(11) **EP 2 190 882 B1**
(45) Veröffentlichungstag und Bekanntmachung des Hinweises auf die Patenterteilung: **07.01.2015**
(21) Anmeldenummer: 08782852.1
(22) Anmeldetag: 12.09.2008
(51) Int. Cl.: C08B 1/00, C08B 16/00

(54) **VERFAHREN ZUR HERSTELLUNG VON CELLULOSEPARTIKELN**
METHOD FOR THE PRODUCTION OF CELLULOSE PARTICLES
PROCÉDÉ DE PRÉPARATION DES PARTICULES DE CELLULOSE

(30) Priorität: 21.09.2007 AT 14982007
(43) Veröffentlichungstag der Anmeldung: 02.06.2010
(73) Patentinhaber: Lenzing AG, 4860 Lenzing (AT)
(72) Erfinder: INNERLOHINGER, Josef, A-4880 Berg i.A. (AT); KRAFT, Gregor, A-4850 Timelkam (AT); WEBER, Hedda, A-4840 Vöcklabruck (AT); HARMS, Haio, A-4810 Gmunden (AT)
(74) Vertreter: Hanemann, Otto
(86) Internationale Anmeldenummer: PCT/AT2008/000324
(87) Internationale Veröffentlichungsnummer: WO 2009/036480

(56) Entgegenhaltungen:
- WO-A-99/31141
- US-A- 4 902 792

## Beschreibung

Die Erfindung betrifft ein Verfahren zur Herstellung von sphärischen, nicht fibrillären Cellulosepartikeln.

Zur Beschreibung der vorliegenden Erfindung soll der Begriff "sphärisch" folgendermaßen verstanden werden: Die Partikel weisen ein Achsenverhältnis (I:d) zwischen 1 und 2,5 auf und zeigen im Mikroskop keine faserartigen Ausfransungen oder Fibrillen,

Der Begriff "fibrillär" soll im Gegensatz dazu folgendermaßen verstanden werden: Die Partikel besitzen ein Achsenverhältnis (I:d) von größer 2,5 und/oder zeigen im Mikroskop für Fasern typische Ausfransungen und Fibrillierung.

Die Anwendungen für Cellulosepulver sind vielfältig und reichen vom Pharmabereich bis zur Bauindustrie. Cellulosepulver sind im Labor als Chromatographiesäulenfüllung ebenso zu finden wie in großtechnischen Prozessen als Filterhilfsmittel. Im Lebensmittel- und Kosmetikbereich sind Cellulosepulver als Hilfs- und Trägersubstanzen weit verbreitet. Allgemein lässt sich auch der Trend beobachten, dass es Bestrebungen gibt, anorganische Pulver (z. B. aus Silica) durch Cellulosepulver zu ersetzen (O. Schmidt, "Anschwemmfiltration von Wein: Mit Kieselgur oder Zellulose", Das deutsche Weinmagazin, pp. 29-35, 2004).

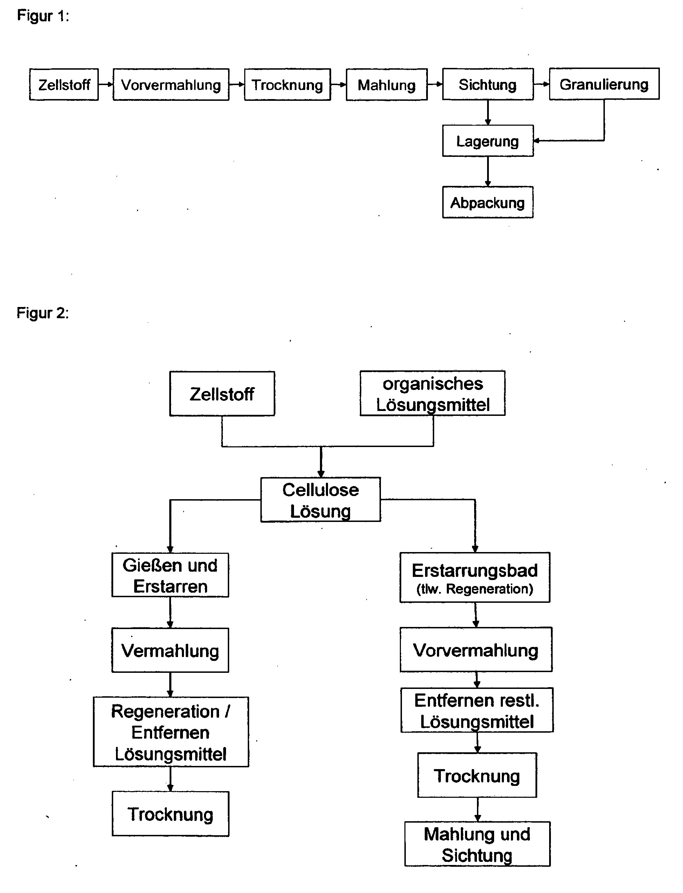

Cellulosepulver werden großteils durch Aufarbeitung und Vermahlung von Zellstoff oder auch Holz und Einjahrespflanzen erhalten. Durch einen zusätzlichen Hydrolyse-Schritt kann sogenannte Mikrokristalline Cellulose (MCC) erhalten werden. Figur 1 zeigt schematisch die Herstellung von Cellulosepulvern aus Zellstoff gemäß dem Stand der Technik.

Je nach Aufwand bei der Herstellung werden Pulver unterschiedlicher Qualitäten (Reinheit, Größe,...) erhalten. Gemeinsam ist all diesen Pulvern, dass sie eine faserige Struktur aufweisen, da natürliche Cellulose in jeder Größenordnung die ausgeprägte Tendenz hat, solch faserige Strukturen zu bilden. Auch MCC, die als sphärisch beschrieben wird, setzt sich aus kristallinen Faserbruchstücken zusammen.

Abhängig von ihrer Mikrostruktur unterscheidet man verschiedene Strukturtypen der Cellulose, insbesondere Cellulose-I und Cellulose-II. Die Unterschiede zwischen diesen Strukturtypen lassen sich röntgenographisch feststellen und sind in der Fachliteratur ausführlich beschrieben.

Sämtliche oben beschriebenen Pulver bestehen aus Cellulose I. Für Herstellung und Anwendung von Cellulose-I-Pulvern gibt es eine große Anzahl von Patenten. Dort sind z.B. auch viele technische Details der Vermahlung patentiert. Wie oben beschrieben, sind Cellulose-I-Pulver faseriger Natur, was für eine Anzahl von Anwendungen äußerst hinderlich ist. So zeigen z. B. Suspensionen solcher Pulver eine stark von der Scherung abhängige Viskosität. Auch zeigen faserige Pulver oftmals eine eingeschränkte Rieselfähigkeit, da sich die Fasern verhaken können.

Cellulosepulver auf Basis Cellulose-II sind am Markt kaum zu finden. Cellulosepulver mit dieser Struktur können entweder aus Lösung (meist Viskose) oder durch Zerkleinerung von Cellulose-II-Produkten (z. B. Cellophan) erhalten werden. Ebenfalls nur in geringen Mengen sind sehr feine Pulver (10µm und darunter) erhältlich.

EP 99/31141 offenbart ein Verfahren zur Herstellung regulärer, poröser Cellulosepartikel. Das beschriebene Verfahren beinhaltet zunächst das Dispergieren einer Cellulose-Lösung in Öl. Die beim Abkühlen der Dispersion entstehenden Polymertröpfchen werden abzentrifugiert und ausgefällt. Im Gegensatz zu diesem Verfahren wird erfindugnsgemäss die Celluloselösung unter die Erstarrungstemperatur abgekühlt und anschliessend zerkleinert.

Die US 5244734 beschreibt die Herstellung sphärischer Partikel mit Durchmessern <20µm aus einer Viskose-Dispersion.

Die WO 99/36604 beschreibt faserige Partikel, die durch Regeneration der Viskose unter möglichst hoher Scherung erhalten werden. Beispielsweise wird ein Strom von 500 ml/min einer verdünnten Viskoselösung mit einer Cellulosekonzentration von 1 bis 4 Gew.% durch eine 3mm-Düse in ein gerührtes Fällbad geleitet. Dabei entstehen aufgrund der hohen Scherung und der geringen Cellulosekonzentration fasrige, fibrilläre Partikel.

Die WO 2007/003699 beschreibt die Herstellung von Cellulosepartikeln durch Regeneration einer Celluloselösung in einer Säure (z. B. durch Sprühen oder Vermischen) mit einer Partikelgröße von vorzugsweise 0,05-10 µm. Die Herstellung der Celluloselösung erfolgt durch eine enzymatische Behandlung des Zellstoffes und anschließende Umsetzung mit einer Base. Die Cellulosepartikel finden Verwendung als Füllstoff und Beschichtungspigment für Papier, da sie leicht und umweltverträglich sind, als cellulosische Pulver für die Nahrungsmittelindustrie oder auch für die pharmazeutische Industrie. Als Variante wird die Modifikation der Cellulose vor oder nach der Regeneration, z. B. durch Acetylierung sowie die Erhöhung der Porosität durch Zugabe von Substanzen, die sich bei diesen Regenerationsbedingungen lösen, genannt.

Die WO 2007/003697 beschreibt die Beschichtung von Cellulosepartikeln (0,05-10 µm) mit Substanzen, die Licht streuen (z. B. Silikate, Titandioxid). Diese Partikel werden ebenfalls als Füllstoff bzw. Beschichtungspigment für Papier und Karton eingesetzt.

Gemäß der WO 2006/034837 werden Cellulosepartikel mit einer Länge von bevorzugt 50 µm und einer Dicke von 1 µm durch Ausübung von Scherkräften auf eine Suspension eines cellulosehältigen Ausgangsprodukts in Wasser hergestellt. Diese sollen als Zuschlagstoff für Papier, Karton und Streichfarben zur Erhöhung der Festigkeit, Verbesserung des Druckbildes, Erhöhung der Farbintensität sowie als Trägerstoff für andere Stoffe eingesetzt werden. Diese Cellulosepartikel sind eindeutig faserig bzw. fibrillär.

Der JP 63092603 ist die Herstellung cellulosischer Mikropartikeln für kosmetische Anwendungen durch Inkorporation von pulverförmigen Substanzen in Viskose zu entnehmen. Dabei wird eine Dispersion aus Viskose, einem anorganischen Füllstoff und einer wasserlöslichen, anionischen, hochmolekularen Verbindung gebildet. Die Koagulation wird beispielsweise durch Erhitzen herbeigeführt. Es finden sich keine genauen Größenangaben der erhaltenen Cellulosepartikel.

Die WO 93/13937 beschreibt die Herstellung von Cellulose-Kugeln mit einem Durchmesser von bevorzugt < 25 µm mit dichter Oberfläche, die keine Poren, Krater oder ähnliches aufweist: Zuerst wird eine Emulsion von Viskose in Öl hergestellt. Die Koagulation findet z. B. in wasserfreien, alkoholischen Salzlösungen statt. Anschließend wird mit konzentrierten alkoholhältigen Salzlösungen gewaschen, um eine Quellung zu verhindern, und mit alkoholhältigen sauren Lösungen regeneriert. Die auf diese Weise hergestellten Partikel werden insbesondere als Trägersubstanzen, sogenannte Carrier für Liganden (Enzyme, Antikörper, Peptide, Proteine) in der Chromatographie angewendet. Aufgrund der dichten Oberfläche der kugelförmigen Cellulosepartikeln treten dabei keine störenden Diffusionsprozesse auf.

In der US 5196527 wird die Herstellung poröser, ionenaustauschender, kugelförmiger bzw. ovaler Cellulosepartikeln mit einer Größe von 3-400 µm durch folgende Schritte beschrieben: Zunächst werden koagulierte Viskosepartikeln durch Bildung einer Dispersion, die Cellulosexanthogenat enthält und anschließende Koagulation der Viskoseteilchen durch Erhitzen oder mit Hilfe eines Koagulationsreagenz hergestellt. Diese Viskoseteilchen werden durch eine Säure oder über eine Quervernetzung mit anschließender Regeneration regeneriert. Durch die Quervernetzung wird eine hohe Druckbeständigkeit der Partikel erreicht. Zuletzt werden ionentauschende Gruppen in die Cellulosemoleküle eingeführt. Diese Cellulosepartikel haben eine Cellulose-II-Struktur und eine Röntgen-Kristallinität von 5 - 50 %, bevorzugt 20 - 40 %.

Auch diese Partikel werden in der Chromatographie sowie zur Reinigung und Trennung verschiedener Stoffe angewendet. Sollen die Cellulosepartikel als Carrier eingesetzt werden, so werden anstelle ionentauschender Gruppen bestimmte Liganden eingeführt, z. B. Antikörper zur Abtrennung von Antigenen bzw. Peptide zur Abtrennung von Enzymen.

Die US 5026841 befasst sich mit der Herstellung poröser, kugelförmiger Cellulosepartikeln mit einer bevorzugten Partikelgröße von 5-80 µm. Hierzu wird ein Celluloseester einer aromatischen Carbonsäure, der in einem organischen Lösungsmittel gelöst ist, unter kräftigem Rühren in eine wässrige Lösung eines anionischen Tensides eingerührt, das organische Lösungsmittel entfernt, die Teilchen isoliert und anschließend die Carbonsäuregruppen abgespalten. Angewendet werden diese Partikel als Füllkörper, Träger für Filtration, Reinigung, Adsorption, Träger, um anorganische oder organische Stoffe zu fixieren sowie als Träger zur Enzym- und Proteinimmobilisierung und -reinigung.

Die KR 950000687 B beschreibt die Herstellung eines Cellulosepulvers (1-20 µm) für kosmetische Produkte aus Ramiefaser nach folgendem Verfahren: Behandlung mit alkalischer Hypochloritlösung, Waschen, Dispergieren in Wasser und anschließendes Sprühtrocknen.

Die JP 2006028452 beschreibt die Herstellung eines Cellulosepulvers als Rieselhilfe für pulverförmige Lebensmittel, z. B. Kochsalz, wobei 50 % der Teilchen eine Partikelgröße zwischen 1-50 µm besitzen,.

Gemäß der US 4415124 wird ein Mikropulver aus Cellulose durch Verfestigung/Verdichtung mit anschließender Mahlung (mindestens 90 % der Teilchen mit einer Partikelgröße < 125 µm) hergestellt. Die erhaltenen Partikel werden als Zusatz zu Mörtel, Putzmassen, Tapetenkleister, Füllstoff für Pressmassen und Kunststoffe sowie als Trägerstoff in der Pharmazie verwendet.

Die EP 1693402 beschreibt unter anderem die Herstellung eines cellulosischen Körpers mit einer bevorzugten Größe von 1 µm - 5 mm, bevorzugt 10 µm - 500 µm aus porösen cellulosischen Teilchen auch regeneriert). Dabei werden in einer Variante cellulosische Teilchen in einem alkalischen Medium verteilt, das ein Bindemittel (z. B. Wasserglas) enthält. Die Suspension wird in Tröpfchenform überführt und anschließend in einer entsprechenden Koagulationslösung koaguliert, wobei sich die Cellulosepartikeln so verbinden, dass Zwischenräume verbleiben. Diese Partikel werden als Träger zur Enzymimmobilisierung, Träger oder Matrix für Adsorption oder als kosmetisches Additiv verwendet. Vorteile sind die hohe mechanische Beständigkeit sowie die hohen möglichen Durchflussraten.

Die US 4659494 beschreibt.die Herstellung eines Pulvers zur Teppichreinigung, das Cellulosepulver mit einer Partikelgröße von vorzugsweise 5-50 µm als Adsorptionsmittel enthält. Auf die Herstellung des Cellulosepulvers wird nicht näher eingegangen. Hauptsächlich soll es wohl durch Zerkleinerung von Zellstoff gewonnen werden.

Viskoseverfahren, die über die Zwischenstufe des Cellulosexanthogenates führen, sind aufgrund der vielfältigen Umweltbelastungen, unter anderem mit schwefelhaltigen Abgasen in der heutigen Zeit unerwünscht bzw. erfordern eine aufwendige Abluftreinigung in der Produktion.

Die WO 02/00771 sowie die US 6174358 führen ausgehend von der Viskose-Technologie NMMO als alternatives Lösungsmittel für die Herstellung von Cellulosepartikeln an. Beide Patente behandeln allerdings fibrilläre und nicht sphärische Partikel.

Gemäß der WO 02/00771 werden Cellulosepartikel durch Dispergieren einer Celluloselösung (aus Cellulose bzw. Cellulosederivaten, Lösungsmittel Aceton, N-Methylmorpholin-N-Oxid, wässrige Natronlauge,...) in einem Fällungsmittel hergestellt. In der Lösung können auch Zusatzstoffen wie Kationisierungsmittel oder Füllstoffe enthalten sein. Das Dispergieren erfolgt durch die mit Hilfe eines Refiners erzeugte Scherbelastung.

Die DE 19755353 beschreibt eine ähnliche Methode, wobei eine Lösung von Cellulose in NMMO zu einem Strahl verformt wird, der durch rotierende Schneidstrahlen in einzelne Segmente zerteilt wird. Die Lösungsteilchen werden in einem Dispersionsmittel aufgefangen. Die perlförmigen Celluloseteilchen werden dann durch Abkühlen der Dispersion oder durch Ausfällen mit einem Fällungsmittel erhalten. Das Verfahren dient zur Herstellung poröser Perlcellulose mit einer Partikelgröße von 50-1000 µm, die als Trenn- und Trägermaterial für medizinische und diagnostische Zwecke, als Adsorbermaterial, z. B. für die Blutdetoxikation sowie als Zellkulturträger verwendet werden.

Die DE 10221537 beschreibt die Herstellung hybridischer Formkörper mit einer Größe von 1-1000 µm, indem zusatzstoffhältige Polysaccharidlösungen in einem inerten Lösungsmittel dispergiert werden, so dass sich Lösungstropfen bilden. Es handelt sich bevorzugt um in N-Methylmorpholin-N-Oxid-Monohydrat gelöste Cellulose. Die Zusatzstoffe sind z. B. keramische Pulver. Anschließend wird die entstandene Dispersion abgekühlt, wobei die Lösungstropfen erstarren. Diese werden abgetrennt und in ein fällendes Medium gebracht. Anschließend erfolgt die Trocknung und/Oder eine thermische Behandlung.

Die WO 02/57319 beschreibt die Herstellung von Celluloseperlen mittels des NMMO-Verfahrens, wobei der Celluloselösung vor dem Verformen verschiedene Zusatzstoffe in größeren Mengen, beispielsweise Titandioxid oder Bariumsulfat sowie als Ionentauscher wirkende Materialien zugegeben werden. Die erhaltenen Produkte können als Ionentauscher oder Katalysatoren eingesetzt werden.

Die Herstellung eines als lonentauschermaterial beispielsweise zur Abwasserreinigung geeigneten Titanoxides wird in US 6,919,029 beschrieben. Besonders hohe Absorptionskapazitäten und -geschwindigkeiten werden bei diesem Material dadurch erreicht, dass das Titanoxidmaterial durch eine spezielle Behandlung an der Oberfläche aktiviert wird. Dieses Titanoxidmaterial kann als "unterstöchiometrisches Titandioxid" bezeichnet werden. Das bedeutet, dass das Verhältnis der Sauerstoffatome zu den Titanatomen im Material kleiner als 2 ist. Zur näheren Beschreibung dieser Oberflächenaktivierung wird auf die Beschreibung in der US 6,919,029 verwiesen.

Weitere Möglichkeiten zur Herstellung von Titanoxiden, die sich besonders gut für die Abwasserbehandlung eignen, bestehen im sogenannten "Dotieren" von Titandioxid mit Eisen- und Schwefel-Atomen. Diese Verbindungen weisen eine photokatalytische Aktivität auf.

Alle diese Verfahren haben den Nachteil, dass sich bereits durch Anwendung geringfügiger Scherkräfte auf eine Celluloselösung eine Orientierung der Cellulosemoleküle in den entstehenden Partikeln ausbildet, die nach dem vollständigen Koagulieren bzw. Regenerieren zu einer fibrillären, d. h. fasrigen Partikelstruktur führt. Die Nachfrage nach sphärischen statt nach fibrillären Pulvern nimmt jedoch immer mehr zu, da fibrilläre Pulver verschiedene Nachteile aufweisen. So sind fibrilläre Pulver für manche Anwendungen (z.B. Viskositätsmodifier) ungeeignet, da sie das Fließverhalten der Flüssigkeit, zu der sie zugegeben werden, scherabhängig machen, d. h. in Richtung einem nicht-Newtonschen Verhalten verändern. Dies ist z. B. bei Druckfarben unerwünscht. Außerdem sind sphärische Cellulosepartikel besser rieselfähig und lassen sich leichter fördern, dosieren und dispergieren. Dies spielt insbesondere bei der Anwendung in der Pharma-, Kosmetik- und Lebensmittelindustrie und beim Ersetzen von Kieselgel und anderen anorganischen Substanzen eine wichtige Rolle. Allerdings müssen diese Partikel trotz einer nicht-fibrillären Struktur eine ausreichende Absorptionsfähigkeit für die verschiedensten Substanzen, z. B. pharmazeutische Wirkstoffe, Aromen, ölige und fettige Substanzen, aufweisen.

Die Aufgabe der vorliegenden Erfindung bestand daher darin, ein wirtschaftliches, umweltfreundliches Verfahren zur Herstellung von sphärischen, also nicht-fibrillären Cellulosepartikeln zur Verfügung zu stellen.

Die Lösung dieser Aufgabe ist ein Verfahren zur Herstellung von sphärischen, nichtfibrillären Cellulosepartikeln mit einer Partikelgröße im Bereich von 1 µm bis 400 µm aus einer Lösung von underivatisierter Cellulose in einer Mischung aus einer organischen Substanz und Wasser, bei dem die Lösung frei fließend unter ihre Erstarrungstemperatur abgekühlt wird, die erstarrte Celluloselösung zerkleinert wird, das Lösungsmittel ausgewaschen wird und die zerkleinerten, ausgewaschenen Partikel getrocknet werden.

Die Zerkleinerung erfolgt bevorzugt mittels einer Mühle.

Die Herstellung einer geeigneten Celluloselösung ist bekannt. Zur kontinuierlichen Herstellung von spinnbaren Celluloselösungen ist heute die Verwendung eines Dünnschichtverdampfers (Filmtruders), wie beispielsweise in EP 0356419 B1 beschrieben, Stand der Technik. Die organische Substanz im Lösungsmittel kann ein Aminoxid, bevorzugt N-Methylmorpholin-N-Oxid (NMMO) sein. Bevorzugt werden mit NMMO Lösungen mit einer Cellulosekonzentration von 1% bis ca. 14 % hergestellt. Als weitere mögliche Lösungsmittel sind sogenannte Ionische Flüssigkeiten bekannt, die prinzipiell mit den gleichen Apparaten und nach den gleichen Verfahren hergestellt und verarbeitet werden können (WO 03/029329, WO 06/108861). In Ionischen Flüssigkeiten kann die geeignete Cellulosekonzentration deutlich höher sein und zwischen 1 % und ca. 30 % betragen

Bei der Durchführung des Verfahrens und der Herstellung des Cellulosepulvers ist erfindungsgemäß darauf zu achten, dass die Lösung frei fließend unter ihre Erstarrungstemperatur abgekühlt wird. "Frei fließend" bedeutet, dass es zwischen dem Austreten aus der Extrusionsöffnung und dem Erstarrungspunkt, also dem Ort, an dem die Lösung zumindest teilweise erstarrt ist, zu keiner Scherbelastung, d. h. zu keiner wesentlichen Verstreckung oder Scherung kommt. Dadurch kann verhindert werden, dass sich faserige Strukturen ausbilden. Dies kann beispielsweise durch die beiden im Folgenden beschriebenen Verfahrensvarianten erreicht werden (Figur 2):
1) Die Abkühlung erfolgt durch Einbringen in eine Flüssigkeit. Die Lösung wird dabei durch eine entsprechende große Öffnung, d. h. als möglichst dicker Strang mit geringer Strömungsgeschwindigkeit in ein Abkühlbad eingebracht, das beispielsweise Wasser, Alkohol, eine Salzlösung, eine Mischung von Wasser und dem zur Auflösung der Cellulose eingesetzten Lösungsmittel enthält. Dabei erstarrt die Lösung und das Lösungsmittel wird bereits teilweise ausgewaschen. In einer bevorzugten Ausführungsform ist die Flüssigkeit ein für die jeweilige Celluloselösung dem Fachmann bekanntes Regenerationsmedium. Dies ist beispielsweise für eine Lösung der Cellulose in wasserhaltigem NMMO eine verdünnte wässrige NMMO-Lösung. Für eine Lösung von Cellulose in einer ionischen Flüssigkeit kommt als Regenerationsmedium jedes für die verwendete ionische Flüssigkeit jeweils geeignete Medium in Frage.
2) Alternativ kann die Abkühlung ohne direkten Kontakt mit einer Flüssigkeit erfolgen. Dabei wird die Lösung beispielsweise durch eine entsprechend große Öffnung in eine Form gegossen. Anschließend lässt man die Masse bei einer Temperatur deutlich unterhalb der Temperatur der Lösung, beispielsweise bei Raumtemperatur langsam erstarren.

Ausgehend von diesem ersten Schritt unterscheidet sich auch die weitere Aufbereitung der Pulver.

Gemäß der Verfahrensvariante 1 wird die abgekühlte, bereits teilweise ausgewaschene Celluloselösung anschließend grob vorzerkleinert (Granulator, Schredder oder ähnliches). Das Granulat sollte nach diesem Schritt eine Größe von ca. 1 bis 2 mm haben. Für diesen Verfahrensschritt ist auch ein handelsüblicher Unterwassergranulator gut geeignet, der beispielsweise bei den Herstellern Kreyenborg und Rieter erhältlich ist. Als Betriebsflüssigkeit kann beispielsweise das oben genannte Abkühlmedium eingesetzt werden.

Dieses Granulat wird bei erhöhter Temperatur in Wasser ausgewaschen, so dass das Lösungsmittel entfernt wird. Dazu wird das Granulat beispielsweise in einem Behälter mit Wasser versetzt und unter Rühren für eine bestimmte Zeit auf 70°C aufgeheizt. Das lösungsmittelbeladene Wasser wird mittels Abschleudern in einer Zentrifuge vom Granulat getrennt. Falls nötig kann dieser Zyklus mehrmals wiederholt werden, bis der Lösungsmittelgehalt unter dem gewünschten Wert liegt. Für kleinere Mengen Granulat ist es zweckmäßig, das Granulat unter fließendem Wasser vom Lösungsmittel zu befreien.

Anschließend wird das Granulat gemahlen. Je nach gewünschter Feinheit sind dafür unterschiedliche Mahlprozesse notwendig. Für die meisten Mühlentypen muss das Granulat noch zusätzlich vorher getrocknet werden, zum Beispiel mit einem Bandtrockner. Zur Mahlung können grundsätzlich alle geeigneten Mühlentypen eingesetzt werden, da der Mahlerfolg oft sehr stark von speziellen Details und Auslegungen der Mühle und nicht ausschließlich von dem angewendeten Mahlprinzip abhängt. Als grundsätzlich besonders geeignet haben sich Schneid-, Spalt-, Strahl- und Prallmühlen erwiesen.

Im Folgenden sind jene Mühlensysteme aufgeführt, die bereits erfolgreich getestet wurden.

### Langspaltmühle:

Der Vorteil dieses Mühlentyps (z.B. UltraRotor von Jäckering) ist, dass feuchtes Granulat vermahlen werden kann und dabei gleichzeitig getrocknet wird. Durch eine angeschlossene Sichtung, kann ein Pulver mit einer Feinheit von <30µm erhalten werden.

### Fließbettgegenstrahlmühle:

Mit diesem Mühlentyp (z.B. von Hosokawa-Alpine) lassen sich Partikel kleiner als 10µm erzeugen. Allerdings lässt sich das Granulat nicht direkt verarbeiten, sondern muss zuerst mittels einer einfacheren mechanischen Mühle vorzerkleinert werden. Strahlmühlen sind sehr energie- und kostenintensiv, liefern aber dank des integrierten Sichters sehr feine Pulver. Auch sogenannten Spiralstrahlmühlen sind geeignet. Als Gas kann Stickstoff oder Luft verwendet werden.

### Prallmühle:

Bei diesen einfachen mechanischen Mühlen hängt die Zerkleinerungswirkung sehr vom verwendeten Mahlwerkzeug ab. Pulver mit einer Feinheit von <150µm sind möglich, welche als Ausgang für die Vermahlung in einer Strahlmühle verwendet werden können. Auch eine Abtrennung des Feinanteils mittels Sichtung ist möglich.

### Cryomahlung:

Zur Verbesserung des Mahlergebnisses können einige Mühlen zusätzlich mit flüssigem Stickstoff gekühlt werden. Auch das Mahlgut wird vorher mit flüssigem Stickstoff versprödet.

Gemäß der Verfahrensvariante 2 wird die erstarrte Spinnmasse vor der eigentlichen Vermahlung ebenfalls mechanisch grob vorzerkleinert, beispielsweise mit einem Schredder, einem Granulator oder ähnlichen Geräten, wobei hier auf eine entsprechende Kühlung zu achten ist, um ein erneutes Aufschmelzen der Lösung zu verhindern. Danach erfolgt die Feinvermahlung der Masse, wobei die bereits oben beschriebenen Mühlentypen zum Einsatz kommen können. Auch in diesem Schritt ist wieder darauf zu achten, dass die Schmelztemperatur der Lösung nicht überschritten wird. In dieser Variante eignet sich die bereits beschriebene Cryomahlung, um ein Aufschmelzen der Spinnmasse zu verhindern.

Die nun als Pulver vorliegende erstarrte Lösung wird, wie bereits für Verfahrensvariante 1 beschrieben, bei erhöhter Temperatur in Wasser regeneriert und anschließend getrocknet. Für gröbere Pulver eignet sich ein Trocknungsband, bei feineren Pulvern ist eine aufwendigere Trocknung, beispielsweise eine Wirbelschicht- oder Sprühtrocknung notwendig.

Auch ein vorhergehender Lösungsmittelaustausch, z. B. gegen Aceton oder Ethanol mit einer anschließenden Trocknung aus diesem Lösungsmittel ist möglich.

Nach dem Trocknen der erhaltenen Partikel kann in beiden Verfahrensvarianten eine zweite Zerkleinerung in einer zweiten Mühle erfolgen. Auch für diese zweite Mahlung eignen sich insbesondere die oben genannten Mühlentypen.

Im erfindungsgemäßen Verfahren können bereits in die Celluloselösung Zusatzstoffe, insbesondere ausgewählt aus der Gruppe, umfassend Pigmente, anorganische Substanzen wie beispielsweise Titanoxide, insbesondere unterstöchiometrisches Titandioxid, Bariumsulfat, Ionenaustauscher, Polyethylen, Polypropylen, Polyester, Ruß, Zeolithe, Aktivkohle, polymere Superabsorber und Flammschutzmittel, eingemischt werden, die im späteren Cellulosepartikel enthalten sein sollen. Die Zugabe kann an beliebigen Stellen in der Lösungsherstellung, in jedem Fall aber vor dem Erstarren erfolgen. Es können 1 bis 200 Gew.% Zusatzstoffe, bezogen auf die Cellulosemenge eingemischt werden. Überraschenderweise hat sich gezeigt, dass diese Zusatzstoffe während des Auswaschens nicht entfernt werden, sondern in den Cellulosepartikeln verbleiben und auch ihre Funktion weitgehend beibehalten. So kann man beispielsweise beim Einmischen von Aktivkohle feststellen, dass deren aktive Oberfläche, die z. B. mit der BET-Methode messbar ist, auch im fertigen, erfindungsgemäßen Partikel vollständig erhalten bleibt. Nicht nur die an der Oberfläche des Cellulosepartikels befindlichen Zusatzstoffe, sondern auch die im Inneren befindlichen sind damit weiterhin vollständig zugänglich. Dies ist sehr überraschend, da man eigentlich erwarten würde, dass die Oberfläche des Zusatzstoffes durch die Celluloselösung vollständig bedeckt würde und daher später nicht mehr zugänglich ist. Wirtschaftlich ist diese Feststellung insbesondere interessant, da man nur geringe Mengen an Zusatzstoffen zugeben muß.

Das Verfahren erlaubt die Herstellung von Cellulosepulver, bestehend aus Partikeln, die eine Cellulose-II-Struktur aufweisen, mit einer Partikelgröße im Bereich von 1µm bis 400µm, einer mittleren Partikelgröße x₅₀ zwischen 4µm und 250µm und monomodaler Partikelgrößenverteilung, und die eine annähernd sphärische Partikelform mit unregelmäßiger Oberfläche, eine Kristallinität im Bereich von 15% bis 45% gemäß der Raman-Methode, eine spezifische Oberfläche (N₂-Adsorption, BET) zwischen 0,2m²/g und 8m²/g und eine Schüttdichte zwischen 250g/l und 750g/l aufweisen.

Die Cellulose-II-Struktur ergibt sich durch das Auflösen und Wiederausfällen der Cellulose und unterscheidet die vorliegenden Partikel insbesondere von den aus Cellulose ohne Auflösungsschritt hergestellten Partikeln.

Die Partikelgröße im Bereich von 1µm bis 400µm mit einer Partikelverteilung, die durch einen x₅₀-Wert zwischen 4µm und 250µm charakterisiert wird, wird natürlich durch die Betriebsweise bei der Mahlung beeinflusst. Durch die besondere Herstellungsweise durch Erstarren einer frei fließenden Celluloselösung und die dadurch hervorgerufenen mechanischen Eigenschaften der erstarrten Cellulosemasse lässt sich diese Partikelverteilung jedoch besonders leicht erreichen. Eine unter Scherbeanspruchung erstarrte Celluloselösung würde unter gleichen Zerkleinerungsbedingungen andere, aber insbesondere fibrilläre Eigenschaften aufweisen. Ebenso überraschend ist die sich ergebende monomodale Partikelgrößenverteilung, insbesondere ohne wesentliche Anteile von kleineren oder größeren Partikeln. Vergleichbare Cellulosepulver, die nach Verfahren aus dem Stand der Technik hergestellt werden, weisen aufgrund ihrer fibrillären Struktur zum einen größere Partikel auf. Diese entstehen beispielsweise durch Verhaken oder sonstiges Verbinden kleinerer fibrillärer Partikel. Außerdem weisen sie einen erheblichen Anteil kleinerer Partikel auf, die beispielsweise durch Abbrechen von einzelnen Fibrillen entstehen.

Die Form der erfindungsgemäßen Partikel ist annähernd sphärisch mit einem Achsenverhältnis (I:d) zwischen 1 und 2,5. Sie haben eine unregelmäßige Oberfläche, zeigen im Mikroskop aber keine faserartigen Ausfransungen oder Fibrillen. Es handelt sich also keineswegs um Kugeln mit glatter Oberfläche. Eine solche Form wäre für die beabsichtigten Anwendungen auch nicht günstig.

Die vergleichsweise niedrige Kristallinität im Bereich von 15% bis 35%, gemessen mit der Raman-Methode, ergibt sich speziell durch die erfindungsgemäße Verfahrensweise. Eine Celluloselösung, die beim oder unmittelbar vor dem Erstarren eine Scherbelastung erfährt, ergibt Partikel mit einer größeren Kristallinität.

Die spezifische Oberfläche, gemessen mittels N₂-Adsorption nach dem BET-Verfahren, beträgt für die erfindungsgemäßen Cellulosepulver zwischen 0,2m²/g und 8m²/g, sofern keine Zusatzstoffe enthalten sind. Die spezifische Oberfläche wird unter anderem durch die verwendete Art der Zerkleinerung und die Partikelgröße beeinflusst. Durch Zusatzstoffe kann die spezifische Oberfläche erheblich erhöht werden, wie die unten beschriebenen Beispiele zeigen.

Die Schüttdichte der erfindungsgemäßen Cellulosepulver, die zwischen 250g/l und 750g/l liegt, ist deutlich höher als die von vergleichbaren, fibrillären Partikeln aus dem Stand der Technik. Sie hat verfahrenstechnisch wesentliche Vorteile, da sie auch die Kompaktheit der erfindungsgemäßen Cellulosepulver und damit unter anderem eine bessere Rieselfähigkeit, Einmischbarkeit in verschiedenste Medien und problemloseren Lagerfähigkeit ausdrückt.

Partikel mit dieser Kombination von Eigenschaften konnten mit dem hier beschriebenen Verfahren zum ersten Mal hergestellt werden. Insbesondere war es auch überraschend, dass sich aufgrund einer vor ihrer Erstarrung frei fließenden Celluloselösung diese für die beschriebenen Anwendungen besonders gut geeigneten Partikel herstellen lassen.

Zusammenfassend weisen die erhaltenen Partikel aufgrund ihrer sphärischen Struktur eine verbesserte Rieselfähigkeit auf und zeigen kaum strukturviskoses Verhalten. Die Charakterisierung der Partikel mittels der in der Industrie weit verbreiteten Particle-Sizing-Geräte ist ebenfalls aufgrund der sphärischen Gestalt einfacher und aussagekräftiger. Die nicht vollkommen glatte und unregelmäßige Oberflächenstruktur führt zu einer erhöhten spezifischen Oberfläche, welche zum erhöhten ausgezeichnetem Adsorptionsverhalten der Pulver beiträgt.

Ein solches Cellulosepulver kann auch Cellulosepartikel enthalten, die zusätzlich 1 bis 200 Gew.%, bezogen auf die Cellulosemenge, inkorporierte Zusatzstoffe, ausgewählt aus der Gruppe, umfassend Pigmente, anorganische Substanzen wie beispielsweise Titanoxide, insbesondere unterstöchiometrisches Titandioxid, Bariumsulfat, Ionenaustauscher, Polyethylen, Polypropylen, Polyester, Aktivkohle, polymere Superabsorber und Flammschutzmittel, enthalten.

Im Folgenden werden bevorzugte Ausführungsformen der Erfindung anhand von Beispielen beschrieben.

Die Bestimmung der Partikelgröße erfolgte mit einem Laserbeugungsmessgerät. Die x₅₀-und x₉₉-Werte wurden mit dem angeschlossenen Auswerteprogramms berechnet.

Die Kristallinitätsbestimmung an Cellulose mit der Raman-Methode wurde durchgeführt wie bei Röder, T., et al, Crystallinity determination of man-made cellulose fibers - comparision of analytical methods. Lenzinger Berichte, 2006. 86: p.132-136 beschrieben.

Die BET-Oberfläche und die Schüttdichten wurden mit handelsüblichen Messgeräten bestimmt.

### Beispiel 1:

Lyocell-Spinnmasse mit einem Cellulosegehalt von 11,5% wurde durch ein Rohr mit 30mm Durchmesser bei einer geringen Fließgeschwindigkeit in einen Wassertank geleitet. Der Durchsatz durch das Rohr betrug dabei in etwa 400-500g Spinnmasse pro Minute. Dabei erstarrte die Masse und regenerierte bereits teilweise. Die erkaltete Masse wurde mit einem Granulator auf eine Größe von ∼1mm zerkleinert. Das verbliebene NMMO wurde unter fließendem Wasser auf einen Gehalt von unter 0,05% ausgewaschen. Das Granulat wurde bei 60°C im Trockenschrank getrocknet.

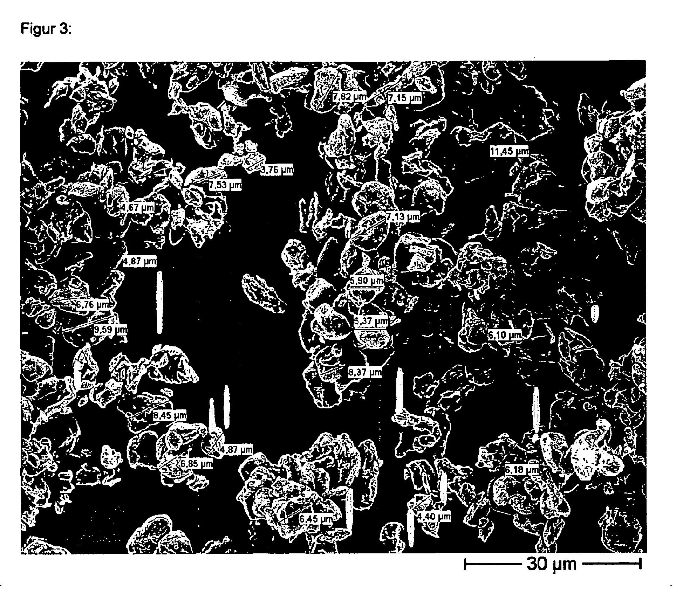

Das getrocknete Granulat wurde anschließend in einer Prallmühle auf eine Feinheit von 100-200µm vermahlen. Dabei durchlief das Granulat die Mühle nur einmal und wurde auch nicht zusätzlich gesichtet. Die Feinvermahlung erfolgte mit einer Gegenstrahlmühle (Hosokawa AFG100) mit integriertem Sichter. Die daraus erhaltenen Partikel (Form sowie Größe einzelner Partikel siehe Figur 3) wiesen folgende Eigenschaften auf:
- Partikelgröße (Laserbeugung) x₅₀=4,8µm & x₉₉=15,0µm
- Kristallinität (Raman) X_{c}=29%
- BET-Oberfläche (N₂-Adsorption) a_{s,BET}=4,9m²/g
- Schüttdichte 304g/l

### Beispiel 2:

Ein NMMO-frei gewaschenes Granulat, hergestellt wie in Beispiel 1, mit einem Trockengehalt von ∼20% wurde nicht getrocknet, sondern direkt mittels einer Langspaltmühle (Typ UltraRotor von Jäckering) vermahlen. Bei diesem Mühlentyp erfolgt neben der Vermahlung eine gleichzeitige Trocknung des Produkts. Dabei wurde eine Feinheit von x₅₀=22,8µm & x₉₉=143µm erreicht. Bei nachgeschalteter Sichtung ergaben sich für die Partikel folgende Eigenschaften:
- Partikelgröße (Laserbeugung) x₅₀=8,3µm & x₉₉=52µm
- Kristallinität (Raman) X_{c}=24%
- BET-Oberfläche (N₂-Adsorption) a_{s,BET}= 1,8m²/g
- Schüttdichte 380g/l

### Beispiel 3:

Lyocell Spinnmasse mit einem Cellulosegehalt von 5% wurde in einer Form zu eine ca. 1cm dicken Platte gegossen, welche bei Raumtemperatur erstarrte. Anschließend wurde die Platte mechanisch mit einem Hammer vorzerkleinert und dieses Granulat danach mit einer Scheidmühle Retsch SM2000 gemahlen. In der Schneidmühle wurde ein relativ grobes Sieb mit einer Conidurlochung von 1mm Maschenweite eingesetzt und 250g Mahlgut, das zuvor im Gefrierschrank auf -8°C gekühlt worden war, innerhalb von 30min langsam von Hand zugegeben, um ein Aufschmelzen des Granulats zu verhindern.
Das erhaltene Pulver wurde zur Regeneration in einen Überschuss an Wasser gegeben und gerührt. Durch Abfiltrieren wurde das Lösungsmittel-Wasser-Gemisch vom Pulver getrennt. Dieser Vorgang wurde 10mal wiederholt bis der NMMO-Gehalt im Waschwasser unter 0,05 gesunken war. Getrocknet wurde das Pulver durch Lösungsmitteltausch des Wassers zu Aceton (fünfmaliger Wechsel) und anschließendem vorsichtigen Abdampfen des Lösungsmittels unter stetigem Rühren. Durch dieses Verfahren wurden Partikel mit folgenden Eigenschaften erzeugt:
- Partikelgröße (Laserbeugung) x₅₀=163µm
- Kristallinität (Raman) X_{c}=31%
- BET-Oberfläche (N₂-Adsorption) a_{s,BET}=0,25m²/g
- Schüttdichte 652g/l

### Beispiel 4:

In eine Lyocell-Spinnmasse mit einem Cellulosegehalt von 10% wurden 100 Gew.% (in Bezug auf Cellulose) Aktivkohlepulver mit einer BET-Oberfläche von a_{s,BET}=58,7m²/g eingemischt. Die erhaltene Masse wurde in ein PVC-Rohr mit 30mm Durchmesser gefüllt und dort bei Raumtemperatur erstarren gelassen. Anschließend wurde der erhaltene Zylinder mechanisch mit Säge und Hammer vorzerkleinert und die erhaltenen Bruchstücke mit einer Partikelgröße im mm-Bereich zum Entfernen des Lösungsmittels in einen Behälter mit einem Überschuss an Wasser gegeben und gerührt. Durch Abfiltrieren wurde das Lösungsmittel-Wasser-Gemisch vom Granulat getrennt. Dieser Vorgang wurde 10mal wiederholt, bis der NMMO-Gehalt im Waschwasser unter 0,05 % gesunken war. Das grobe Pulver wurde im Trockenschrank bei 60°C getrocknet.
Die weitere Vermahlung erfolgte mit einer, kleinen Laborschneidmühle, wobei zuerst ein 40mesh-Sieb und in einem zweiten Mahlschritt ein 80mesh-Sieb verwendet wurde. Durch dieses Verfahren wurden Partikel mit folgenden Eigenschaften erzeugt:
- Partikelgröße (Laserbeugung) x₅₀=230µm
- BET-Oberfläche (N₂-Adsorption) a_{s,BET}=28,3m²/g

Der im Vergleich zu den Aktivkohle-freien Partikeln der vorherigen Beispiele hohe Wert für die BET-Oberfläche ist auf die verwendete Aktivkohle zurückzuführen. Er zeigt deutlich, dass die Poren der Aktivkohle während der Partikelherstellung nicht mit Cellulose verstopft werden und auch noch im Cellulose-Pulver praktisch vollständig zugänglich sind.

## Patentansprüche

1. Verfahren zur Herstellung von sphärischen, nicht-fibrillären Cellulosepartikeln mit einer Partikelgröße im Bereich von 1 µm bis 400 µm aus einer Lösung von underivatisierter Cellulose in einer Mischung aus einer organischen Substanz und Wasser, **dadurch gekennzeichnet, dass** die Lösung frei fließend unter ihre Erstarrungstemperatur abgekühlt wird, die erstarrte Celluloselösung zerkleinert wird, das Lösungsmittel ausgewaschen wird und die zerkleinerten, ausgewaschenen Partikel getrocknet werden.

2. Verfahren gemäß Anspruch 1, wobei die Zerkleinerung mittels einer Mühle erfolgt

3. Verfahren gemäß Anspruch 1, wobei die Abkühlung durch Einbringen in eine Flüssigkeit erfolgt.

4. Verfahren gemäß Anspruch 3, wobei die Flüssigkeit ein Regenerationsmedium ist.

5. Verfahren gemäß Anspruch 1, wobei die Abkühlung ohne direkten Kontakt mit einer Flüssigkeit erfolgt.

6. Verfahren gemäß Anspruch 1, wobei das Trocknen durch Lösungsmittelaustausch erfolgt.

7. Verfahren gemäß Anspruch 1, wobei nach dem Trocknen eine zweite Zerkleinerung in einer zweiten Mühle erfolgt.

8. Verfahren gemäß Anspruch 2 oder 7, wobei die Mühle eine Schneid-, Spalt-, Strahl- oder Prallmühle Ist.

9. Verfahren gemäß Anspruch 1, wobei der Celluloselösung vor dem Abkühlen 1 bis 200 Gew.% Zusatzstoffen, bezogen auf die Cellulosemenge, ausgewählt aus der Gruppe, umfassend Pigmente, Titanoxide, insbesondere unterstöchiometrisches Titandioxid, Bariumsulfat, Ionenaustauschor, Polyethylen, Polypropylen, Polyester, Aktivkohle, polymere Superabsorber und Flammschutzmittel zugegeben werden.

10. Verfahren gemäß Anspruch 1, wobei die organische Substanz ein Aminoxid, bevorzugt N-Methylmorpholin-N-Oxid ist.

## Claims

1. Process for the production of spherical, non-fibrillar cellulose particles with a particle size in the range of 1 µm to 400 µm from a solution of non-derivatised cellulose in a blend of an organic substance and water **characterised in that** the solution is cooled down to below its solidification temperature free flowing, the solvent is washed out, the solidified cellulose solution is disintegrated, the solvent is washed out and the disintegrated and washed out particles are dried.

2. Process according to claim 1 whereby the disintegration is performed by means of a mill.

3. Process according to claim 1 whereby the cooling down is done by introducing this to a liquid.

4. Process according to claim 3 whereby the liquid is a regeneration medium.

5. Process according to claim 1 whereby the cooling down is done without direct contact with a liquid.

6. Process according to claim1 whereby the drying is done by the exchange of solvents.

7. Process according to claim 1 whereby a second disintegration is performed in a second mill after drying.

8. Process according to claim 2 or 7 whereby the mill is a cutting, gap, jet or baffle mill.

9. Process according to claim 1 whereby to the cellulose solution are added up to 200 weight percentage of additives, in relation to the cellulose amount, selected from the group comprising pigments, titanium oxide, in particular substoichiometric titanium oxide, barium sulphate, ion exchangers, polyethylene, polypropylene, polyester, activated carbon, polymer superabsorbers and flame protection agents.

10. Process according to claim 1 whereby the organic substance is an amine oxide, preferably N-methyl morpholine N-oxide.

## Revendications

1. Procédé de fabrication de particules de cellulose sphériques non fibrillaires, d'une taille comprise entre 1 µm et 400 µm, à partir d'une solution de cellulose non dérivatisée dans un mélange constitué d'une substance organique et d'eau, **caractérisé en ce que** la solution, s'écoulant librement, est refroidie à une température inférieure à sa température de solidification, **en ce que** la solution cellulosique solidifiée est broyée, **en ce que** le solvant est rincé, et **en ce que** les particules broyées et rincées sont séchées.

2. Procédé selon la revendication 1, le broyage se faisant au moyen d'un broyeur.

3. Procédé selon la revendication 1, le refroidissement ayant lieu par l'apport d'un liquide.

4. Procédé selon la revendication 3, le liquide étant un fluide de régénération,

5. Procédé selon la revendication 1, le refroidissement ayant lieu sans contact direct avec un liquide.

6. Procédé selon la revendication 1, le séchage ayant lieu par l'échange de solvants.

7. Procédé selon la revendication 1, un second broyage ayant lieu dans un second broyeur après le séchage.

8. Procédé selon la revendication 2 ou 7, le broyeur étant un broyeur à couteaux (granulateur), à fente, à jet ou à percussion.

9. Procédé selon la revendication 1, dans lequel des additifs à hauteur d'1 à 200 % en masse, rapportés à la quantité de cellulose, choisis dans le groupe comprenant les pigments, les oxydes de titane, notamment les oxydes de titane sous-stoechiométriques, le sulfate de barium, les échangeurs d'ions, le polyéthylène, le polypropylène, le polyester, le charbon actif, les superabsorbants polymères et les retardateurs de flamme, sont ajoutés à la solution de cellulose avant le refroidissement.

10. Procédé selon la revendication 1, la substance organique étant un oxyde d'amine, de préférence du N-oxyde de N-méthylmorpholine
